# EUROPEAN PATENT SPECIFICATION

(11) **EP 3 541 170 B1**
(45) Date of publication and mention of the grant of the patent: **14.05.2025**
(21) Application number: 17870822.8
(22) Date of filing: 13.11.2017
(51) Int. Cl.: A01K 1/02

(54) **PET PROTECTIVE TRANSPORT ARRANGEMENT**
SCHUTZTRANSPORTANORDNUNG FÜR HAUSTIERE
AGENCEMENT DE PROTECTION POUR LE TRANSPORT D'ANIMAUX DE COMPAGNIE

(30) Priority: 18.11.2016 SE 1651516
(43) Date of publication of application: 25.09.2019
(73) Proprietor: MIM Construction AB, 462 92 Frändefors (SE)
(72) Inventor: BJÖRNETUN, Mats, 462 94 Frändefors (SE)
(74) Representative: Bjerkén Hynell KB
(86) International application number: PCT/SE2017/051121
(87) International publication number: WO 2018/093319

(56) References cited:
- JP-A- 2014 093 989
- US-A- 5 671 698
- US-A1- 2003 127 060
- US-A1- 2006 278 173
- US-A1- 2007 193 522
- US-A1- 2008 173 253
- US-A1- 2011 197 823
- US-A1- 2016 057 968
- US-A1- 2016 057 968

## Description

### TECHNICAL FIELD

This invention relates to a safety pet transportation device, basically in the form of a portable cage, wherein at least one part is arranged with one opening for attachment of a door, and wherein safety belt holders are arranged to facilitate securing of the device in a vehicle.

### BACKGROUND

Safety has been more and more focused in connection with transportations. For human beings, significant improvements have been achieved the recent decades. Regarding pets, there has also been significant development. However, most safety measures of today are relatively cumbersome to utilise regarding pets of some size, e.g. dogs and cats. Mostly it requires quite a lot of handcraft to assemble existing safety devices. Accordingly, there is a need for improvement to more easily facilitate safe transport of pets.

Document US2016057968 discloses a versatile pet transporter which can be wheeled, carried by hand, or restrained on a car seat. The handle for wheeling is telescopic, retractable, and recessed when not in use, obviating any danger from the handle in a car. Seat belts pass through six different flanges, anchoring the transporter to a car seat in all directions. The transporter may be fitted with a litter box and readily replaceable litter packages, a fan, sound monitoring, and other features.

Document US2003127060 discloses a pet carrier having series of interconnected panels and removable stiffening members forming a flexible pet enclosure that can be carried by a pet owner or secured in a vehicle for transport. As the support members are semirigid, the roof of the enclosure may be resiliently deformed as needed, such as for placing the carrier under a passenger airline seat. Removal of the support members allows a user to collapse the pet carrier to a substantially flat configuration. The pet carrier may be carried by a pet owner via a six-point shoulder strap system that is capable of levelling the carrier during use. The pet carrier also has several openings to provide ventilation and a compartment that communicates with the inside of the carrier for inserting an air conditioning pad.

### SUMMARY OF THE INVENTION

It is an object of the invention to improve on the above described situation, which is achieved by means of pet protecting transport device according to the claims.

Thanks to the invention, a very easily handled safety arrangement is achieved that saves time and makes it much easier for the pet owner to arrange for a safe transport wherein said safety arrangement comprises a plurality of safety belt holders. Furthermore, it also will enable a more comfortable situation for the pet.

According to the invention;
- There are arranged a plurality of said safety belt holders including four of said safety belt holders, two positioned adjacent each one of two lower corners areas and two positioned adjacent each one of two upper corners areas, which provides the advantage that increased flexibility is achieved.
- said plurality of safety belt holders are positioned symmetrically in relation to a vertical center line of said side wall, and the lower safety belt holders extend substantially vertical and the upper safety belt holders extend at an angle in relation to the vertical, wherein preferably the angle is between 120° to 150°, which provides the advantage that increased flexibility is achieved in combination with extra ease of use.
- two identical side walls are attached to the main body to form the device, which provides the advantage that even more increased flexibility is achieved and cost-efficiency.

According to further preferred aspects of the invention;
- a peripheral solid body part, where the safety belt holders are arranged, has a generally convex form, which provides the advantage that increased ease of use is achieved and better strength properties.
- The main body is symmetrically formed in relation to a vertical line and preferably that said front and back parts include differently angled portions, which provides for cost-efficiency and the further advantage that sharp corners are eliminated.
- a centre portion of a wall is arranged within the opening for a door and wherein preferably said center portion is substantially flat and extending mainly vertically but with an angle in relation to the vertical to make said at least one door leaning inwards to the centre of the cage, which provides the advantage that cost-efficiency may be achieved, good adaption to a car seat and that a door will be urged in a closing direction by gravity.
- said main body is arranged with reinforcing members that preferably also are used for screw attachments, which provides the advantage that reinforcements are easily produced in a cost-efficient manner, e.g. extruding.
- a major portion of said at least one door comprises a grating (41), which provides beneficial ventilation of the device.
- The handle is positioned a distance off-centered in relation to a longitudinal center plane, which provides the advantage that the device is easier to carry.

### BRIEF DESCRIPTION OF THE FIGURES

In the following, the invention will be described in more detail regarding the enclosed figures, wherein;
- Fig. 1: shows a perspective view from above of a preferred embodiment according to the invention,
- Fig. 2: shows a perspective view seen from below of the safety device in Fig. 1,
- Fig. 3: shows a side view of the safety device in Fig. 1,
- Fig. 4: shows a cross-sectional view in perspective from above of a device shown in Fig. 1,

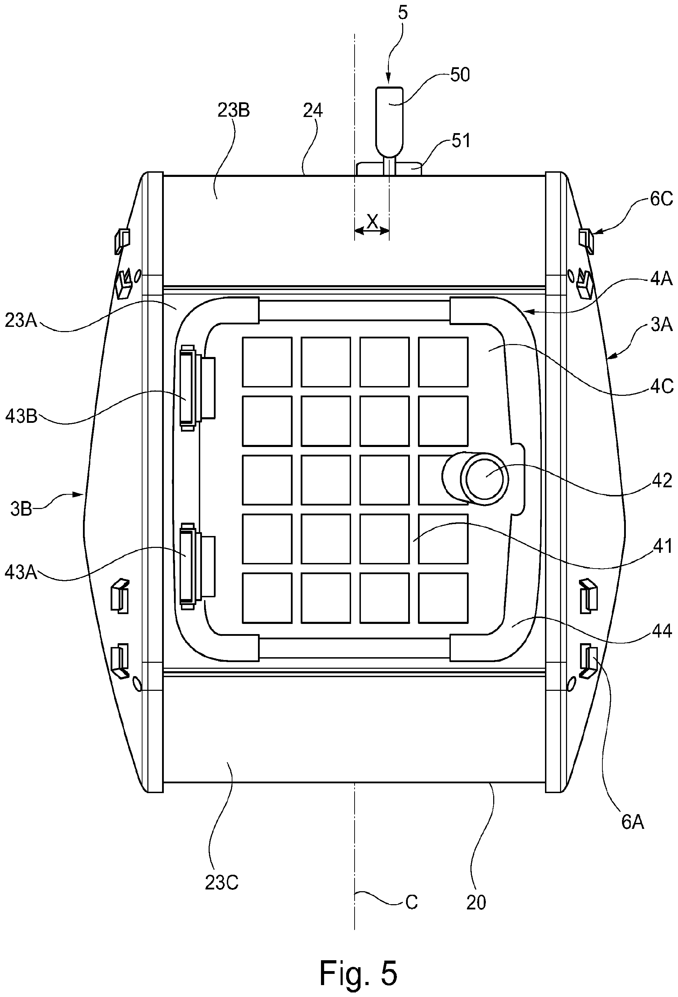

- Fig. 5: shows a front view the safety device in Fig. 1,
- Fig. 6: shows a corner portion of a cross-sectional horizontal view in a plane through the centre of the safety device in Fig. 1, and,
- Fig. 7: shows a corner portion of a cross-sectional vertical view of the safety device in Fig. 1.

### DETAILED DESCRIPTION

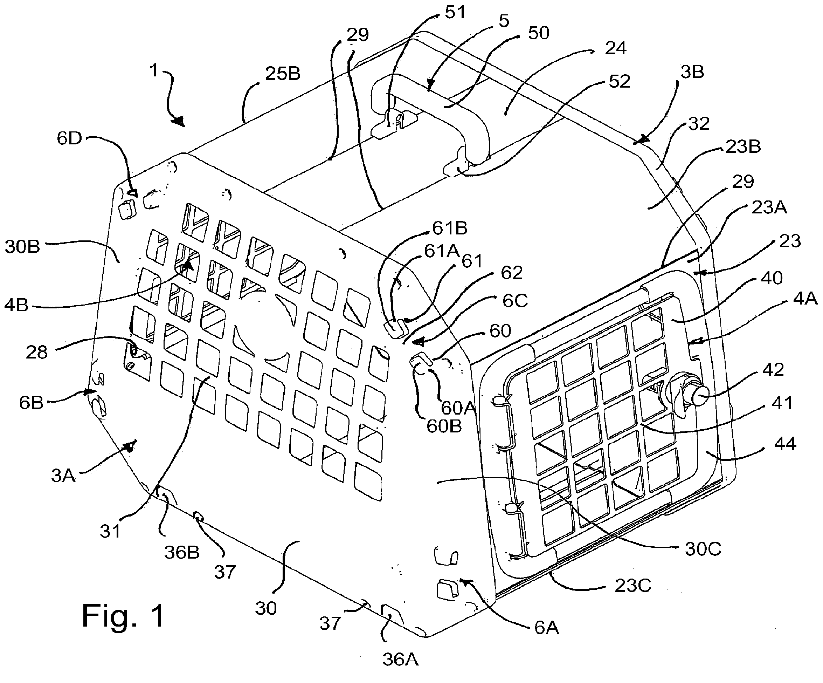

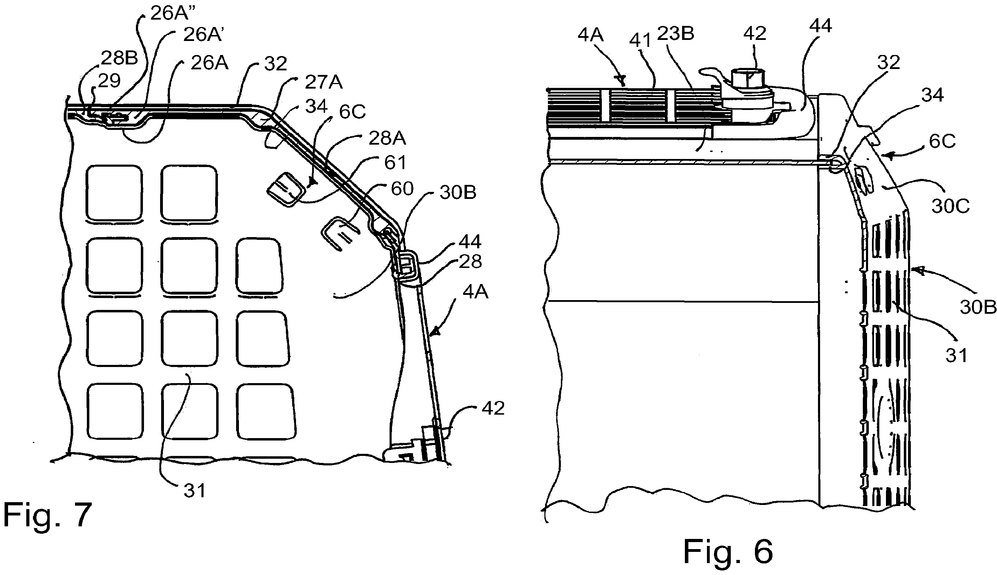

In Fig. 1 there is shown a protective transport device 1 according to the invention, seen in a perspective view from above. In general, the protective transport device 1 comprises a generally tube formed main body 2, a left-hand side wall 3A, and a right-hand side wall 3B, generally forming a cage. On the front and back parts 23, 25 of the main body 2 there are arranged openings 28 having doors 4A, 4B fit thereto. Further, there is a carrying handle 5 arranged on the top part 24 of the main body 2. Preferably the main body is built from several extruded parts (see Fig 7) that are slid together presenting a joint 29 at the exterior, which joint preferably is pivot able as will be explained more in detail below. Moreover, there is also a safety arrangement 6A-6D arranged on each one of the side walls 3A, 3B.

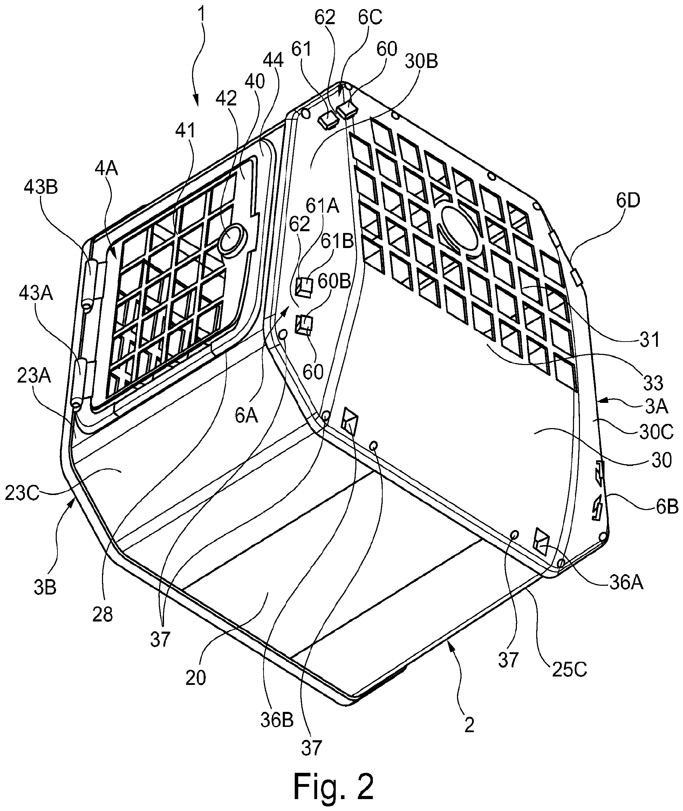

The main body 2 comprises a substantially flat top part 24 and a parallel substantially flat bottom part 20 (see Fig. 2). To avoid sharp corners, the top part 24, bottom part 20 and front/back parts 23, 25 are joined by means of angled, interconnecting portions 23B, 23C, 25B, 25C, preferably the angle β is in the range of 30°-60°. The main body 2 is symmetric in relation to a vertical plane passing through a vertical centre line C thereof, but not symmetric in relation to a horizontal plane passing through the centre thereof.

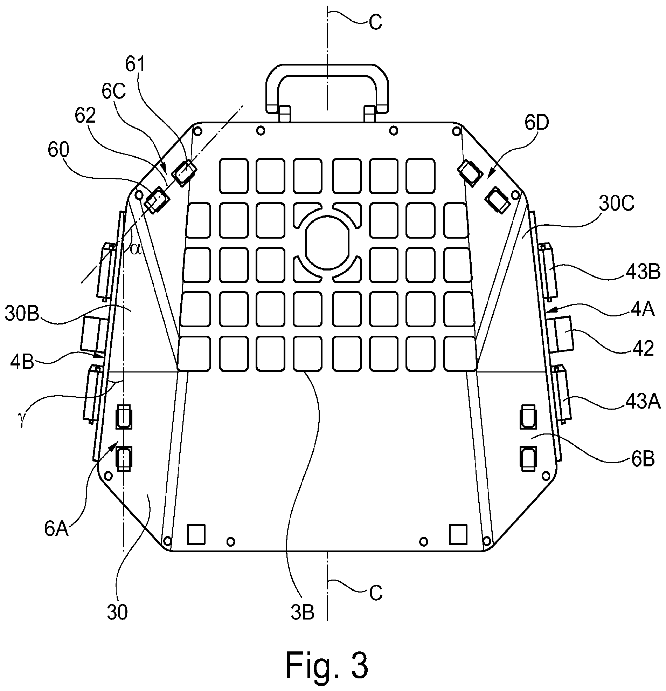

As is evident when looking at Fig. 3, the front part 23 and back part 25 do present an angle γ in relation to a vertical line. Thanks to the inward inclination γ of the the front and back parts 23, 25, the doors 4A, 4B will be affected by a momentum (when opened), which urges the door 4A, 4B in a closing direction thanks to the gravitational force acting thereof, which is an advantage in many situations. A further reason for this inclination is that the cage 1 will then mostly be better adapted to fit into a seat in a car.

Fig. 3 more clearly presents that the transition parts 23B, 23C, 25B, 25C of the front and back parts 23, 25 may present an angle of about 45° in relation to the vertical line, which provides the advantage that no very sharp angles are formed.

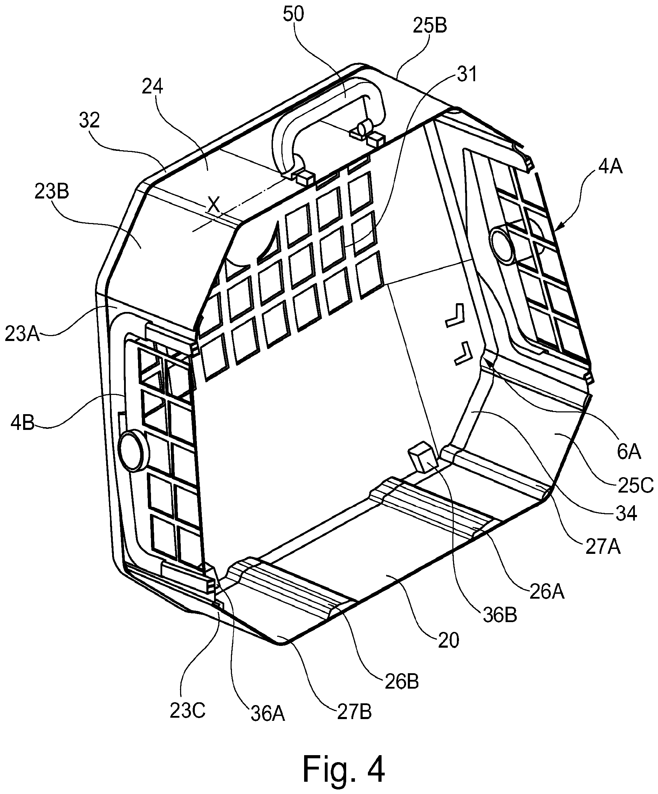

As seen in Fig. 4, the main body 2, at different positions, is arranged with reinforcing ribs 26A, 26B, 27A, 27B. These ribs also serve the purpose of anchoring means for screws 37 that are used to attach the side walls 3A, 3B. Furthermore, some of these ribs 26A preferably are in the form of an assembly of two interconnecting members 26A', 26A" of neighbouring parts 28A, 28B (see Fig. 7) that form the main body 2. Preferably these interconnecting members 26A', 26A" form a joint 9 that is pivotable in one direction, i.e. such that they cannot collapse/pivot inwardly, but outwardly, which provides the advantage that the cage 1 may interact with a compression zone of a vehicle. For instance, if the cage 1 is positioned in a small car, exactly fit in behind the driver seat, with one its door facing the back of the driver seat, the main body may easily be compressed in a crash, such that it may not cause extra resistance that otherwise could cause neck injuries to the driver.

The two side walls 3A, 3B are exactly the same and as a consequence to fit with the main body, each side wall 3A, 3B is symmetric in relation to a vertical centre plane. The side walls have a grating 31 that covers more than 50% of the total area of each side wall 3A, 3B, which grating 31 is surrounded by a homogenous supporting part 30. Also, the side walls 3A, 3B present angled portions 30B, 30C preferably in the range of 30°-60° in connection with the transfer zone to the front and back parts 23, 25. A reason for these angled walls 30B, 30C is the same as for the angled parts 23B, 23C, 25B, 25C of the main body 2, i.e. to avoid sharp cone corners. Also, these angled portions 30B, 30C are preferably positioned such that they protrude about 45° in relation to the main extension of the side walls.

In these angled portions 30B, 30C, which preferably coincide to present a homogenous strong peripheral part 30 of a side wall 3A, 3B, the safety transportation devices 6A-6D are arranged. Each one of these safety devices are in the form of two L-shaped protruding members 60, 61 presenting a first part 61A (see Fig. 2) of the L that is substantially flat-formed and protrudes about 2-8mm out from the side wall and a second part 61B presenting the foot of the L pointing in a direction towards each other, but not contacting each other. The flat-shaped foot parts 61B, 60B protrude such that their flat surfaces are parallel to each other.

Accordingly, they will create an opening 62 in between the ends of the foot parts and jointly form a retaining device for a safety belt (or the like). Hence, a safety belt that is flexible, may easily be introduced into the gap 62 and moved in under one of the foot parts 61B, 60B and then the other side of the belt may be pushed into the gap 62 to be withheld by the second L-shaped member 60. Thereby a safe retaining will be achieved of a belt (not shown) introduced therein. On each side wall 3A, 3B there are four such safety devices 6A-6D arranged.

Two of these safety devices 6A, 6B are arranged adjacent the bottom 20 near each one of the lower corners. These two devices 6A, 6B have an extension of the foot parts 60B, 61B that substantially extends in a vertical direction. The two others 6C, 6D are positioned adjacent the top part 24 near each one of the upper corner and have their foot parts 60B, 61B extending in a direction that presents an angle α in relation to a vertical line. The angle α will be in the range of 120°-150°, preferably about 135° in relation to the vertical line, implying approximately 45° in relation to the horizontal line. Thanks to this positioning each side wall will enable easy fixation of a three-point safety belt to the safety transportation arrangement 1 according to the invention. Thanks to the symmetric disposition of the safety devices 6A-6D it will not make any difference if the transportation device 1 is turned one or the other way, nor if it is put in a left-hand seat or in a right-hand seat. The arrangement of the safety devices will always enable safe fixation of the safety transportation device 1.

Further, it is shown in Fig. 3 and Fig. 2 that the widest horizontal cross-section enclosed by the space formed between the side walls 3A, 3B is positioned slightly below the horizontal centre of the transport device, which brings about the advantage that more space is available at the lower part, and also that the part 31 arranged with the grating may be substantially flat-shaped which reduces the risk of hooking into things with the grating 31.

The attachment of the side walls 3A, 3B to the main body 2 has already been indicated above, i.e. that screws 37 are used to safely attach the side walls to the main body 2. Furthermore, it is clear from the figures, e.g. Fig. 4, 6 and 7, that flanges 32 and 34, are used to securely attach the side walls 3A, 3B to the main body 2. These flanges 32, 34 protrude on each side of the surfaces of the main body 2 and accordingly they securely fixate the main body 2 in all directions. Moreover, there is shown, see Fig. 2 and 4, that there are indentations 36B arranged in the lower part of the side walls that coincide with the inner flange 34, which indentations 36A, 36B have the purpose of providing grips for safe attachment of the cage 1 in a vehicle equipped with corresponding male grip members (not shown).

The doors 4A, 4B are pre-fixed in frames 44 that are adapted to be attached to corresponding openings in the front and back parts 23, 25 of the main body 2. Further, there is arranged a door 40, having hinges 43A, 43B and an opening knob 42. The major part of each door 4A, 4B is arranged with a grating 41.

On top of the top part 24 of the main body 2 there is arranged a handle 5. The handle comprises a gripping part 50 and an attachment part 51. The attachment part 51 is positioned at a distance X away from a centre line C of the main body, which provides the advantage that the transportation device 1 may be more easily carried by a person.

## Claims

1. A safety pet transportation device, basically in the form of a portable cage (1), comprising a main body (2) having two oppositely attached side walls (3A, 3B), at least one door (4A,4B), a handle (5) and at least one safety arrangement (6A-6D), said main body (2) having a bottom part (20), a top part (24) with said handle (5) and a front and a back part (23, 25), wherein at least one of said front and back parts (23, 25) is arranged with one opening (28) for attachment of said at least one door (4A, 4B), wherein said safety arrangement (6A-6D) comprises a plurality of safety belt holders (6A-6D), and wherein, at least one of said side walls (3A,3B) has a peripheral solid body part (30), **characterized in that** the peripheral solid body part (30) is arranged with said plurality of safety belt holders (6A-6D), said plurality of safety belt holders include four of said safety belt holders (6A-6D), two (6A, 6B) positioned adjacent each one of two lower corners areas and two (6C, 6D) positioned adjacent each one of two upper corners areas such that said plurality of safety belt holders (6A-6D) are positioned symmetrically in relation to a vertical center line of said side wall (3A, 3B), and the lower safety belt holders (6A, 6B) extend substantially vertically reet and the upper safety belt holders (6C,6D) extend at an angle (α) in relation to the vertical, wherein preferably 120° < α < 150°.

2. A safety pet transportation device, according to claim 1, wherein said peripheral solid body part (30) has a generally convex form.

3. A safety pet transportation device, according to any of claims 1-2, wherein two identical side walls (3A, 3B) are arranged.

4. A safety pet transportation device, according to any proceeding claim, wherein said main body (2) is symmetrically formed in relation to a vertical line and that said front and back parts (23, 25) include differently angled portions (25A-25C)

5. A safety pet transportation device, according to claim 4, wherein a centre portion (23A) is arranged within said opening (28) and wherein preferably said center portion (23A) is substantially flat and extending mainly vertically but with an angle (γ) in relation to the vertical to make said at least one door 4A, 4B leaning inwards to the centre of the cage (1).

6. A safety pet transportation device, according to claim 4 or 5, wherein said main body (2) is arranged with reinforcing members (26 A,B, 27 A,B) that preferably also are used for screw attachments (37).

7. A safety pet transportation device, according to any of claims 1-6, wherein a major portion of said at least one door (4A, 4B) comprises a grating (41).

8. A safety pet transportation device, according to any of claims 1-7, wherein said handle (5) is positioned a distance (x) off-centered in relation to a longitudinal center plane.

## Patentansprüche

1. Sicherheits-Haustiertransportvorrichtung, im Wesentlichen in Form eines tragbaren Käfigs (1), umfassend einen Hauptkörper (2) mit zwei gegenüberliegend angebrachten Seitenwänden (3A, 3B), mindestens einer Tür (4A, 4B), einem Griff (5) und mindestens einer Sicherheitsanordnung (6A-6D), wobei der Hauptkörper (2) einen unteren Teil (20), einen oberen Teil (24) mit dem Griff (5) sowie einen vorderen und einen hinteren Teil (23, 25), wobei wenigstens ein Teil aus dem vorderen und dem hinteren Teil (23, 25) mit einer Öffnung (28) zum Anbringen der wenigstens einen Tür (4A, 4B) angeordnet ist, wobei die Sicherheitsanordnung (6A-6D) eine Mehrzahl von Sicherheitsgurthaltern (6A-6D) umfasst, und wobei wenigstens eine der Seitenwände (3A, 3B) ein umfangsseitiges massives Körperteil (30) aufweist, **dadurch gekennzeichnet, dass** das umfangreiche massive Körperteil (30) mit der Mehrzahl von Sicherheitsgurthaltern (6A-6D) angeordnet ist, wobei die Mehrzahl von Sicherheitsgurthaltern vier der Sicherheitsgurthalter (6A-6D) umfasst, von denen zwei (6A, 6B) benachbart zu jedem von zwei unteren Eckbereichen und zwei (6C, 6D) benachbart zu jedem von zwei oberen Eckbereichen positioniert sind, so dass die Mehrzahl von Sicherheitsgurthaltern (6A-6D) symmetrisch in Bezug auf eine vertikale Mittellinie der Seitenwand (3A, 3B) positioniert sind, und wobei die unteren Sicherheitsgurthalter (6A, 6B) sich im Wesentlichen vertikal erstrecken und wobei die oberen Sicherheitsgurthalter (6C, 6D) sich unter einem Winkel (α) in Bezug auf die Vertikale erstrecken, wobei vorzugsweise 120° <α< 150° gilt.

2. Sicherheits-Haustiertransportvorrichtung nach Anspruch 1, wobei das umfangsseitige massive Körperteil (30) eine allgemein konvexe Form aufweist.

3. Sicherheits-Haustiertransportvorrichtung nach einem der Ansprüche 1 - 2, wobei zwei identische Seitenwände (3A, 3B) angeordnet sind.

4. Sicherheits-Haustiertransportvorrichtung nach einem der vorhergehenden Ansprüche, wobei der Hauptkörper (2) in Bezug auf eine vertikale Linie symmetrisch geformt ist und wobei das vordere und das hintere Teil (23, 25) unterschiedlich angestellte Abschnitte (25A-25C) enthalten.

5. Sicherheits-Haustiertransportvorrichtung nach Anspruch 4, wobei ein mittlerer Abschnitt (23A) innerhalb der Öffnung (28) angeordnet ist und wobei vorzugsweise der mittlere Abschnitt (23A) im Wesentlichen eben ist und sich hauptsächlich vertikal, aber in Bezug auf die Vertikale mit einem Winkel (γ) erstreckt, um die mindestens eine Tür 4A, 4B nach innen zur Mitte des Käfigs (1) neigen zu lassen.

6. Sicherheits-Haustiertransportvorrichtung nach Anspruch 4 oder 5, wobei der Hauptkörper (2) mit Verstärkungselementen (26 A,B, 27 A,B) angeordnet ist, die vorzugsweise auch für Schraubbefestigungen (37) verwendet werden.

7. Sicherheits-Haustiertransportvorrichtung nach einem der Ansprüche 1 bis 6, wobei ein größerer Abschnitt der mindestens einen Tür (4A, 4B) ein Gitter (41) umfasst.

8. Sicherheits-Haustiertransportvorrichtung nach einem der Ansprüche 1 bis 7, wobei der Griff (5) in Bezug auf eine Längsmittelebene um einen Abstand (x) außermittig angeordnet ist.

## Revendications

1. Dispositif de sécurité pour le transport d'animaux domestiques se présentant essentiellement sous la forme d'une cage portable (1), comprenant un corps principal (2) ayant deux parois latérales fixées de manière opposée (3A, 3B), au moins une porte (4A, 4B), une poignée (5) et au moins un agencement de sécurité (6A-6D), ledit corps principal (2) ayant une partie de fond (20), une partie de sommet (24) avec ladite poignée (5) et une partie avant et une partie arrière (23, 25), dans lequel au moins l'une parmi lesdites parties avant et arrière (23, 25) est agencée avec une ouverture (28) pour la fixation de ladite au moins une porte (4A, 4B), dans lequel ledit agencement de sécurité (6A-6D) comprend une pluralité de supports de ceinture de sécurité (6A-6D), et dans lequel, au moins l'une parmi lesdites parois latérales (3A, 3B) possède une partie de corps périphérique solide (30), **caractérisé en ce que** la partie de corps périphérique solide (30) est agencée avec ladite pluralité de supports de ceinture de sécurité (6A-6D), ladite pluralité de supports de ceinture de sécurité comporte quatre desdits supports de ceinture de sécurité (6A-6D), deux (6A, 6B) étant positionnés de manière adjacente à chacune des deux zones de coin inférieur et deux (6C, 6D) étant positionnés de manière adjacente à chacune des deux zones d'angle supérieures de telle sorte que ladite pluralité de supports de ceinture de sécurité (6A-6D) sont positionnés de manière symétrique par rapport à une ligne centrale verticale de ladite paroi latérale (3A, 3B), et les supports de ceinture de sécurité inférieurs (6A, 6B) s'étendent sensiblement verticalement et les supports de ceinture de sécurité supérieurs (6C, 6D) s'étendent selon un angle (α) par rapport à la verticale, dans lequel de préférence 120° < α < 150°.

2. Dispositif de sécurité pour le transport d'animaux domestiques selon la revendication 1, dans lequel ladite partie de corps périphérique solide (30) a une forme généralement convexe.

3. Dispositif de sécurité pour le transport d'animaux domestiques selon l'une quelconque des revendications 1 et 2, dans lequel sont agencées deux parois latérales (3A, 3B) identiques.

4. Dispositif de sécurité pour le transport d'animaux domestiques selon l'une quelconque des revendications précédentes, dans lequel ledit corps principal (2) est formé symétriquement par rapport à une ligne verticale et dans lequel lesdites parties avant et arrière (23, 25) comportent des parties (25A-25C) inclinées différemment

5. Dispositif de sécurité pour le transport d'animaux domestiques selon la revendication 4, dans lequel une portion centrale (23A) est agencée au sein de ladite ouverture (28) et dans lequel, de préférence, ladite portion centrale (23A) est sensiblement plate et s'étend principalement verticalement mais avec un angle (γ) par rapport à la verticale pour faire en sorte que ladite au moins une porte 4A, 4B s'incline vers l'intérieur par rapport au centre de la cage (1).

6. Dispositif de sécurité pour le transport d'animaux domestiques selon la revendication 4 ou 5, dans lequel ledit corps principal (2) est agencé avec des éléments de renforcement (26 A,B, 27 A,B) qui sont, de préférence, également utilisés pour des fixations à vis (37).

7. Dispositif de sécurité pour le transport d'animaux domestiques selon l'une quelconque des revendications 1 à 6, dans lequel une portion majeure de ladite au moins une porte (4A, 4B) comprend une grille (41).

8. Dispositif de sécurité pour le transport d'animaux domestiques selon l'une quelconque des revendications 1 à 7, dans lequel ladite poignée (5) est positionnée à une distance (x) décentrée par rapport à un plan central longitudinal.
